# FASCICULE DE BREVET EUROPEEN

(11) **EP 2 846 996 B1**
(45) Date de publication et mention de la délivrance du brevet: **08.07.2020**
(21) Numéro de dépôt: 13727249.8
(22) Date de dépôt: 03.05.2013
(51) Int. Cl.: B60Q 3/51, B60Q 3/64, B60Q 3/208, B32B 17/10, F21V 8/00

(54) **VITRAGE ÉCLAIRANT AVEC DÉFLECTEUR INCORPORÉ**
VERGLASUNG ZUR BELEUCHTUNG MIT EINEM INTEGRIERTEN DEFLEKTOR
ILLUMINATING GLAZING WITH INCORPORATED DEFLECTOR

(30) Priorité: 10.05.2012 FR 1254297
(43) Date de publication de la demande: 18.03.2015
(73) Titulaire: SAINT-GOBAIN GLASS FRANCE, 92400 Courbevoie (FR)
(72) Inventeur: MASSAULT, Laetitia, F-60280 Magny Les Compiegne (FR); BAUERLE, Pascal, F-80700 Roye (FR); KLEO, Christophe, F-60350 Attichy (FR); VERRAT-DEBAILLEUL, Adèle, F-60150 Villers-sur-Coudun (FR); BERARD, Mathieu, F-75019 Paris (FR); DUBOST, Brice, F-75013 Paris (FR)
(74) Mandataire: Saint-Gobain Recherche
(86) Numéro de dépôt international: PCT/FR2013/050990
(87) Numéro de publication internationale: WO 2013/167832

(56) Documents cités:
- EP-A1- 1 533 632
- EP-A2- 1 903 359
- WO-A1-2007/077099
- WO-A1-2010/097110
- WO-A1-2011/092419
- WO-A1-2012/028820
- DE-A1- 10 147 267
- FR-A1- 2 899 954
- US-A1- 2010 139 165

## Description

La présente invention concerne un vitrage éclairant, en particulier un vitrage pour véhicules, capable d'émettre de la lumière de façon orientée.

Il est connu d'incorporer des modules de diodes électroluminescentes (modules LED) au niveau du bord de vitrages simples ou feuilletés, de façon à ce que la lumière émise par les LED entre par la tranche d'une feuille de verre et soit guidée par celle-ci jusqu'à un élément diffusant, appelé également moyen d'extraction de la lumière.

Ces vitrages éclairants ont souvent une fonction d'éclairage d'ambiance. Le moyen d'extraction de la lumière diffuse en effet la lumière, extraite de la feuille éclairée, indifféremment dans toutes les directions. Dans certains cas il peut toutefois être souhaitable, voire nécessaire, de limiter l'angle de diffusion de la lumière extraite. Ainsi par exemple dans le domaine de l'habitat, lorsqu'on souhaite éclairer un élément de décoration particulier pour le mettre en valeur, ou bien dans le domaine automobile lorsqu'on souhaite éclairer une zone de l'habitacle, à proximité d'un passager, sans gêner les autres passagers, et notamment le conducteur.

On pourrait certes envisager d'orienter la lumière diffuse, extraite de la feuille guide d'onde, par un déflecteur fixé sur une des faces de la feuille éclairée à proximité de l'élément diffusant. Une telle solution serait toutefois peu satisfaisante d'un point de vue esthétique car un tel déflecteur, opaque, ferait saillie du vitrage et dégraderait significativement l'impression de planéité et de transparence du vitrage lorsque la source lumineuse est éteinte.

La demande WO 2011/092419 A1 décrit un vitrage éclairant comprenant une feuille de verre et une source de lumière positionnée en regard de la tranche de la feuille de verre.

La demande FR 2 899 954 A1 décrit un panneau lumineux comprenant un substrat plan transparent pourvu sur une de ses surfaces d'une zone d'extraction diffuse du rayonnement guidé dans le substrat.

La demande EP 1 903 359 A2 décrit un luminaire pour toit automobile. Le luminaire comprend une feuille de verre, une source de lumière positionnée en regard de la tranche de la feuille de verre, une feuille réfléchissante collée sur la face supérieure de la feuille de verre et un film diffusant en forme de lentille de Fresnel disposé sur la face inférieure à l'interface air/feuille.

La demande US 2010/0139165 A1 décrit un panneau lumineux comprenant un guide de lumière plan pourvu sur une de ses surfaces d'une zone d'extraction réfléchissante et une source de lumière disposée en regard de la tranche du guide de lumière.

La présente invention est basée sur l'idée d'intégrer la fonction de déflecteur au cœur du vitrage en configurant, dans une zone limitée du vitrage, l'une des faces principales de la feuille éclairée comme un relief comportant des motifs géométriques pourvus d'une interface réfléchissante et capables d'orienter la lumière. Pour que cette zone joue efficacement le rôle de déflecteur, la réflexion de la lumière doit être très majoritairement de type spéculaire.

Le terme « interface réfléchissante » désigne ici
- soit l'interface entre la feuille éclairée et un milieu solide en contact avec celle-ci,
- soit l'interface entre une structure plane accolée à la feuille éclairée et un milieu solide en contact avec cette structure plane ; pour que la lumière puisse passer librement de la feuille éclairée dans cette structure plane accolée, celle-ci doit avoir un indice de réfraction supérieur ou égal à l'indice de réfraction de la feuille éclairée.

La présente invention a plus particulièrement pour objet un vitrage éclairant comprenant
- une première feuille de verre d'indice de réfraction n₁ avec une première face principale, une deuxième face principale et une tranche ;
- un film transparent en polymère en contact adhésif avec la deuxième face principale de la première feuille, ledit film ayant un indice de réfraction n₂ < n₁ ;
- une source de lumière, de préférence un module de diodes électroluminescentes (module LED), positionnée en regard de la tranche de la première feuille de verre,
ledit vitrage étant caractérisé par le fait qu'une zone de la deuxième face principale de la première feuille de verre est pourvue d'un relief réfléchissant ou bien est couverte d'une structure plate, plane et transparente, d'indice de réfraction n₃ supérieur ou égal à n₁, pourvue d'un relief réfléchissant.

L'invention a également pour objet un véhicule, de préférence un véhicule automobile comportant un tel vitrage éclairant, le vitrage éclairant faisant de préférence partie du toit du véhicule.

L'étendue de cette zone en relief qui joue le rôle de déflecteur est de préférence significativement inférieure à celle de la première feuille. Elle représente avantageusement moins de 30 %, de préférence entre 1 et 25 %, en particulier entre 1 et 10 % de l'étendue de la première feuille.

Le vitrage de la présente invention peut être un vitrage simple, de préférence en verre trempé, ou bien un vitrage feuilleté comportant au moins deux feuilles simples collées l'une à l'autre de manière connue au moyen d'un intercalaire de feuilletage. Dans un mode de réalisation préféré, le vitrage de la présente invention comporte par conséquent en outre une deuxième feuille de verre avec une première face principale, une deuxième face principale et une tranche, le film transparent en polymère jouant alors le rôle d'intercalaire de feuilletage et étant en contact adhésif avec la deuxième face principale de la première feuille de verre et avec la première face principale de la deuxième feuille de verre.

Lorsque le film transparent en polymère est un intercalaire de feuilletage il peut être constitué des matériaux utilisés habituellement à cette fin, à condition qu'ils aient un indice optique n₂ inférieur à l'indice optique de la première feuille de verre (n₁). On peut citer à titre d'exemple d'un matériau qui convient parfaitement le poly(butyral de vinyle) qui a un indice optique d'environ 1,48, c'est-à-dire un indice optique inférieur à l'indice optique du verre minéral classiquement voisin de 1,5.

Il est important de noter que, dans la description ci-après du vitrage, le terme « première feuille » désignera toujours la feuille de verre éclairée au niveau de sa tranche par la ou les sources lumineuses. La première feuille ou feuille éclairée est de préférence celle en contact avec l'intérieur du véhicule ou du bâtiment.

Chacune des deux feuilles du vitrage de la présente invention a une tranche et deux faces principales. On appellera « première face principale » la face destinée à être orientée vers l'intérieur de l'habitacle du véhicule ou vers l'intérieur du bâtiment et « deuxième face principale » celle qui sera dirigée vers l'extérieur du bâtiment ou de l'habitacle du véhicule. Lorsque le vitrage de la présente invention n'est intégré ni dans la carrosserie d'un véhicule ni dans le mur d'un bâtiment, cette terminologie signifie simplement que les premières faces principales des deux feuilles sont orientées de la même manière.

Comme déjà expliqué en introduction, le relief réfléchissant doit avoir une faible rugosité de façon à ce que la réflexion soit essentiellement de type spéculaire. Le relief et rugosité de l'interface réfléchissante sont choisis de manière à ce que les largeurs totales à mi-hauteur de la distribution angulaire de l'intensité lumineuse émise par le système soient comprises de préférence entre 30° et 60°. Une rugosité plus importante du relief réfléchissant aura pour conséquence une réflexion à caractère plus diffus et donc une distribution angulaire plus élargie, à l'inverse une rugosité plus faible du relief réfléchissant aura pour conséquence une réflexion lumineuse à caractère plus spéculaire et donc une distribution angulaire plus resserrée autour de la direction spéculaire.

La distribution angulaire de l'intensité lumineuse émise par le dispositif est mesurable par les méthodes goniophotométriques bien connues de l'homme du métier et décrites par exemple dans les documents de référence de la Commission Internationale de l'Eclairage « CIE 070-1987 The Measurement of Absolute Luminous Intensity Distributions » et « CIE 121-1996 The Photometry and Goniophotometry of Luminaires »*.*

Afin que la largeur de la distribution angulaire de l'intensité lumineuse soit comprise dans les valeurs recherchées, il est envisageable, alternativement ou en complément à une rugosité du relief réfléchissant, de disposer un élément diffusant dans la première feuille, sur la deuxième ou sur la première face principale de la première feuille à proximité immédiate de la zone texturée comportant le relief réfléchissant.

Cet éventuel élément diffusant présente par ailleurs l'avantage esthétique de masquer la texture de l'interface réfléchissante pour un observateur regardant, au travers de la première face principale de la première feuille, la zone munie de cette interface réfléchissante.

Indépendamment de la rugosité de l'interface réfléchissante, on peut définir une hauteur ou profondeur du relief qui est égale à la distance entre le point le plus haut et le plus bas dudit relief.

La hauteur du relief réfléchissant est comprise entre 5 µm et 1 mm, de préférence entre 10 µm et 500 µm, en particulier entre 20 et 100 µm.

Le relief réfléchissant peut être le relief d'une zone de la deuxième face principale de la première feuille de verre. Il n'est toutefois pas aisé de fabriquer des feuilles de verre comportant, dans une zone limitée d'une de leurs surfaces, un relief relativement peu profond avec des surfaces orientées de manière appropriée et suffisamment lisses pour permettre une réflexion spéculaire. Un tel relief pourrait être créé par exemple par gravure laser.

Il est considérablement plus facile de créer le relief réfléchissant en appliquant sur la surface de la feuille de verre une structure plate préformée comportant un tel relief. Une telle structure plate transparente peut être un film en matière plastique (polymère organique), de préférence en poly(éthylène téréphtalate), polycarbonate, poly(méthacrylate de méthyle), polystyrène. De tels films polymères texturés par un relief sont disponibles sur le marché et l'on peut citer par exemple le film Vikuiti® Image Directing Film II commercialisé par la société 3M.

On peut également former une structure plate transparente comportant un relief approprié en déposant à la surface de la deuxième surface principale de la première feuille de manière connue par voie sol-gel un revêtement minéral ou organo-minéral à base de silice. Un relief peut être formé à la surface d'un tel revêtement en appliquant une surface avec un relief négatif pendant la phase de solidification du sol, par exemple de la manière décrite dans WO2008/14322.

Le relief, pour pouvoir jouer le rôle de déflecteur de la lumière, doit être une interface réfléchissante. On entend par interface réfléchissante dans la présente invention une interface qui réfléchit au moins 50 % de la lumière visible. Cette interface du relief réfléchit de préférence au moins 80 %, en particulier au moins 90 % de la lumière visible.

Le caractère réfléchissant de l'interface peut être obtenu par exemple par dépôt d'un revêtement réfléchissant, de préférence une couche métallique, notamment une couche d'argent, de cuivre, d'aluminium, d'or, de nickel ou de chrome, sur le relief de la structure plane transparente ou de la surface de la deuxième feuille.

Le caractère réfléchissant du relief peut également être dû au fait que l'indice de réfraction n₂ du film transparent en polymère, qui est en contact avec le relief, est inférieur à l'indice n₁ de la première feuille de verre ou à l'indice n₃ de la structure plane. La loi de Snell-Descartes (n₁ sin θ₁ = n₂ sin θ₂) permet de calculer l'angle d'incidence θ₁ au-delà duquel un rayon lumineux est totalement réfléchi (θ₂ = 90°) par une interface entre deux milieux d'indices optiques différents. Plus la différence d'indice est importante, plus θ₁ est faible, c'est-à-dire moins un rayon lumineux a besoin d'être rasant pour être réfléchi par l'interface. Dans la présente invention, l'indice n₂ est de préférence inférieur d'au moins 0,02, de préférence d'au moins 0,1 à l'indice n₁ de la première feuille de verre ou à l'indice n₃ de la structure plane transparente.

Enfin, une troisième solution, analogue à la précédente, consiste à rendre le relief réfléchissant en y déposant un revêtement de bas indice ayant un indice de réfraction n₄ inférieur d'au moins 0,02, de préférence d'au moins 0,1 à l'indice n₁ de la première feuille de verre ou à l'indice n₃ de la structure plane transparente.

Le relief réfléchissant comporte avantageusement une pluralité de motifs géométriques constitués de surfaces planes ou courbes. Il s'agit de préférence d'un relief régulier avec des motifs géométriques répétitifs, c'est-à-dire des motifs géométriques ayant sensiblement la même forme et placés sensiblement à égale distance les uns des autres.

On peut citer à titre d'exemple de relief réfléchissant régulier un relief de type lentille de Fresnel ou un relief de type prisme de Fresnel. Un relief de type prisme de Fresnel est particulièrement préféré.

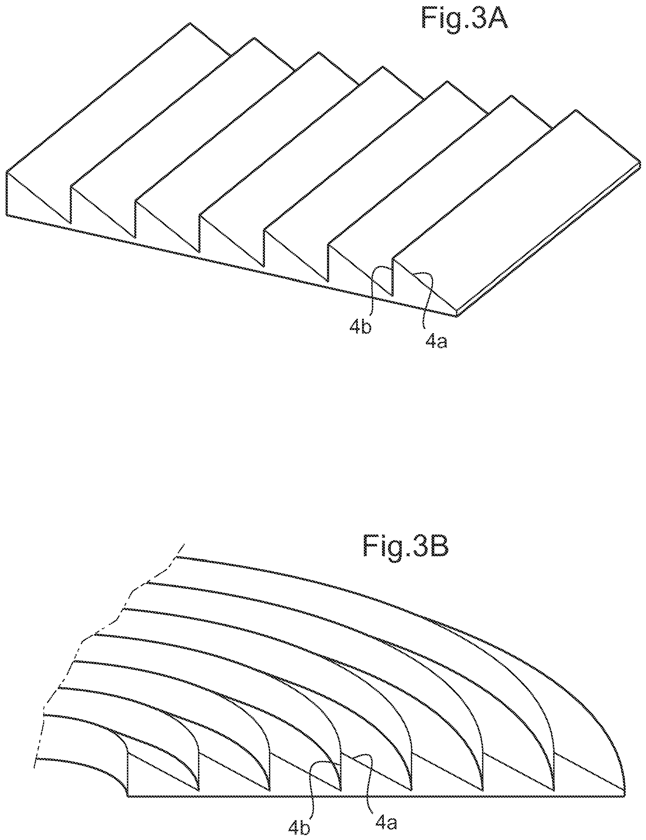

Un prisme de Fresnel est une succession de prismes de petite taille d'angle constant. Ces prismes sont disposés de manière contiguë parallèlement les uns à côté des autres. La figure 3 A montre une vue en perspective d'un prisme de Fresnel classique constitué de sept prismes individuels droits. La figure 3 B montre une variante intéressante d'un prisme de Fresnel où les prismes individuels du relief ont une forme arquée.

Dans le vitrage éclairé de la présente invention, les prismes individuels dudit relief sont de préférence essentiellement parallèles à la tranche éclairée de la première feuille de verre. Par « essentiellement parallèles », on entend ici que les prismes, lorsqu'ils sont droits, forment un angle aigu inférieur à 10 ° avec la tranche ou, pour des prismes courbes, tels que représentés sur la figure 3B, les tangentes à la courbe forment toutes avec la tranche de la première feuille un angle aigu inférieur à 10 °.

Bien entendu, la forme de la zone pourvue d'un relief ou portant une structure plane avec un relief est indépendante de la forme des prismes. On peut en effet tout à fait concevoir une zone arrondie contenant des prismes droits ou, à l'inverse, une zone de forme rectangulaire constituée de prismes incurvés.

Le prisme de Fresnel comprend donc une alternance de surfaces obliques et de surfaces essentiellement perpendiculaires à la base du prisme et au plan général du vitrage. Pour que le prisme de Fresnel puisse jouer efficacement son rôle de déflecteur, les surfaces obliques réfléchissantes du prisme de Fresnel doivent être orientées vers la source de lumière comme il sera expliqué en détail ci-après en référence aux figures.

Lorsque le relief déflecteur est situé non pas directement dans la deuxième surface principale de la première feuille de verre, mais sur une structure plane transparente appliquée sur cette deuxième surface principale, il convient de veiller à ce que la lumière émise par la source lumineuse et guidée par la première feuille puisse entrer librement dans ladite structure plane transparente. Pour cela, cette structure plane transparente doit être en contact avec la deuxième surface principale de la première feuille, sur toute sa surface opposée à celle pourvue du relief réfléchissant. L'interface de contact doit être non réfléchissante. Ce caractère non réfléchissant peut être obtenu en veillant à ce que l'interface de contact soit essentiellement exempte d'un matériau ayant un indice de réfraction n₅ < n₁, et notamment exempte d'air (nₐᵢᵣ = 1).

On peut coller par exemple la structure plane transparente au moyen d'un adhésif transparent ayant un indice de réfraction proche de n₁. On peut également utiliser pour la structure plane transparente un polymère thermoplastique et chauffer ce polymère, avant mise en contact avec la première feuille, au moins localement jusqu'à son point de ramollissement. Encore une autre possibilité consiste à former la structure plane transparente par RIM (*reaction injection-moulding*) d'un mélange de monomères aboutissant à la formation d'un polymère thermodurci *in situ.*

La présente invention permet ainsi d'extraire de la lumière du guide d'onde que constitue la première feuille en l'absence de tout élément diffusant utilisé classiquement dans ce domaine technique. L'absence d'un tel élément diffusant se traduit par une amélioration du rendement lumineux du vitrage. Le vitrage de la présente invention est par conséquent avantageusement dépourvu d'un élément diffusant la lumière.

Pour des raisons esthétiques, il est toutefois envisageable de disposer un élément diffusant dans la première feuille ou sur la première ou deuxième face principale de la première feuille à proximité immédiate de la zone texturée comportant le relief réfléchissant. Pour des raisons évidentes, cet élément doit avoir un flou (*haze*) suffisamment faible pour que les largeurs totales à mi-hauteur de la distribution angulaire de l'intensité lumineuse émise par le système soient comprises entre 30° et 60°.

La présente invention est à présent expliquée plus en détail en référence aux figures annexées dans lesquelles,
La figure 1 est une coupe transversale du bord d'un premier mode de réalisation d'un vitrage selon l'invention,
La figure 2 est une coupe transversale du bord d'un deuxième mode de réalisation d'un vitrage selon l'invention,
La figure 3 A montre la forme d'un relief de type prisme de Fresnel droit
La figure 3 B montre la forme d'un relief de type prisme de Fresnel arqué.

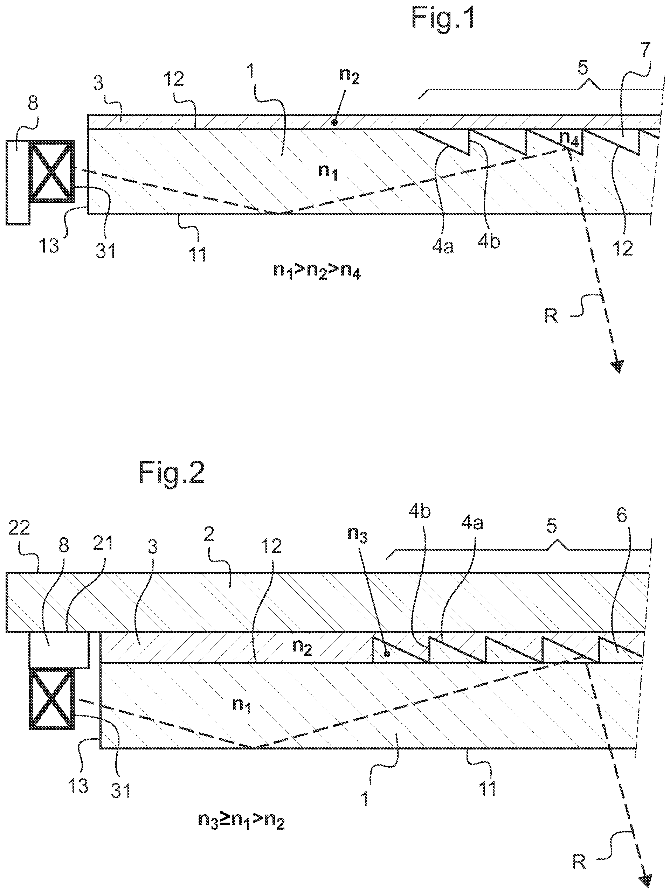

Le vitrage selon l'invention représenté à la figure 1 est un simple vitrage comportant une première feuille de verre (1) avec une première face principale (11), une deuxième face principale (12) et une tranche (13). La première feuille présente un indice optique n₁, généralement proche de 1,5. Un module de diodes électroluminescentes (8) est positionné de manière à ce que la face émettrice des LED soit en regard de la tranche (13) de la première feuille. A une certaine distance de la tranche éclairée de la première feuille se trouve une zone (5) de la deuxième face principale (12) de la première feuille est texturée, c'est-à-dire comporte un relief de type prisme de Fresnel, constitué d'une pluralité de prismes individuels, constitués chacun d'une surface oblique (4a) et d'une surface (4b) essentiellement perpendiculaire au plan général de la première feuille. Les creux du relief sont comblés par un matériau (7) à faible indice optique (n₄ << n₁), par exemple un matériau minéral à base de silice formé *in situ* par un procédé sol-gel. Toute la deuxième face principale (12) de la première feuille est en contact adhésif avec un film polymère transparent (3) d'indice optique n₂ < n₁ qui recouvre également le matériau minéral (7).

Du fait que l'indice optique n₂ de l'intercalaire (3) est inférieur à l'indice optique n₁ de la première feuille, celle-ci fonctionne comme un guide d'onde pour un rayon lumineux (R) émis par la LED. Lorsque ce rayon (R) arrive au niveau du relief de la zone (5) texturée, il n'est pas réfractée par l'interface en forme de prisme de Fresnel mais est réfléchi par une des surfaces obliques (4a). Comme les surfaces obliques réfléchissantes (4a) sont toutes orientées vers la source de lumière, cette réflexion du rayon lumineux (R) se fait de manière privilégiée vers un espace assez limité sous le vitrage.

La figure 2 représente une coupe transversale du bord d'un vitrage feuilleté selon l'invention. Ce vitrage comporte une première feuille (1) avec une première face principale (11), une deuxième face principale (12) et une tranche (13) et une deuxième feuille (2) avec une première face principale (21) et une deuxième face principale (22). Le film transparent (3) en contact adhésif avec la première face principale (21) de la deuxième feuille et la deuxième face principale (12) de la première feuille joue ici le rôle d'intercalaire de feuilletage. Des modules LED (8) à émission latérale sont placés sur la première face principale de la deuxième feuille (21) de manière à ce que la face émettrice des LED soit en regard de la tranche (13) de la première feuille. La zone texturée (5) correspond ici, non pas à un relief réfléchissant dans la deuxième surface principale (12) de la première feuille, mais à une structure plane et plate (6) pourvue d'un relief réfléchissant. L'indice optique n₃ de cette structure plate (6) est supérieur ou égal à n₃ et un rayon lumineux R qui arrive au niveau de l'interface entre la première feuille (1) et la structure plane (6) n'est pas réfléchi par cette interface mais entre dans la structure plate. Il n'est réfléchi que par l'une des surfaces obliques (4a) de l'interface réfléchissante que constitue le relief dans la zone (5).

Les figures 3A et 3B sont fournies principalement pour illustrer deux modes de réalisation particulièrement préférés de la géométrie du relief réfléchissant de la zone (5). Les deux figures représentent des prismes de Fresnel, constitués d'une pluralité de prismes individuels présentant chacun une surface (4b) essentiellement perpendiculaire au plan de la base du prisme, et une surface oblique (4a). Ce sont ces surfaces obliques (4a) qui seront de préférence orientées vers la source lumineuse et réfléchiront la lumière vers une direction grossièrement perpendiculaire au plan du vitrage.

## Revendications

1. Vitrage éclairant comprenant
- une première feuille de verre (1) d'indice de réfraction n₁ avec une première face principale (11), une deuxième face principale (12) et une tranche (13) ;
- un film transparent en polymère (3) en contact adhésif avec la deuxième face principale (12) de la première feuille (1), ledit film ayant un indice de réfraction n₂ < n₁ ;
- une source de lumière (8), de préférence un module de diodes électroluminescentes (module LED), positionnée en regard de la tranche (13) de la première feuille de verre,
**caractérisé par le fait qu'**une zone (5) de la deuxième face principale (12) de la première feuille de verre est pourvue d'un relief réfléchissant à réflexion essentiellement spéculaire ou bien est couverte d'une structure plate transparente (6), d'indice de réfraction n₃ supérieur ou égal à n₁, pourvue d'un relief réfléchissant à réflexion essentiellement spéculaire.

2. Vitrage selon la revendication 1, **caractérisé par le fait qu'**il comprend en outre une deuxième feuille de verre (2) avec une première face principale (21), une deuxième face principale (22) et une tranche (23), le film transparent en polymère (3) étant en contact adhésif avec la deuxième face principale (12) de la première feuille de verre (1) et avec la première face principale (21) de la deuxième feuille (2).

3. Vitrage selon la revendication 1 ou 2, **caractérisé par le fait que** la hauteur du relief réfléchissant est comprise entre 5 µm et 1 mm, de préférence entre 10 µm et 500 µm, en particulier entre 20 et 100 µm.

4. Vitrage selon l'une quelconque des revendications précédentes, **caractérisé par le fait que** la structure plate transparente (6) est un film en matière plastique, de préférence en poly(éthylène téréphtalate), polycarbonate, poly(méthacrylate de méthyle), polystyrène, ou un revêtement minéral ou organo-minéral à base de silice obtenu par voie sol gel.

5. Vitrage selon l'une quelconque des revendications précédentes, **caractérisé par le fait que** le caractère réfléchissant du relief est due à la présence une couche métallique déposée sur ledit relief.

6. Vitrage selon l'une quelconque des revendications 1 à 4, **caractérisé par le fait que** le caractère réfléchissant du relief est dû au fait que l'indice de réfraction n₂ du film transparent en polymère (3) est inférieur d'au moins 0,02, de préférence d'au moins 0,1 à l'indice n₁ de la première feuille de verre (1) ou à l'indice n₃ de la structure plane (6).

7. Vitrage selon l'une quelconque des revendications 1 à 4, **caractérisé par le fait que** le caractère réfléchissant du relief est dû à la présence, sur ledit relief, d'un revêtement de bas indice ayant un indice de réfraction n₄ inférieur d'au moins 0,02, de préférence d'au moins 0,1 à l'indice n₁ de la première feuille de verre (1) ou à l'indice n₃ de la structure plane (6).

8. Vitrage selon l'une quelconque des revendications précédentes, **caractérisé par le fait que** le relief réfléchissant comporte des motifs géométriques constitués de surfaces planes ou courbes, ledit relief étant de préférence un relief régulier avec des motifs géométriques répétitifs.

9. Vitrage selon l'une quelconque des revendications précédentes, **caractérisé par le fait que** le relief réfléchissant est un relief de type lentille de Fresnel ou de type prisme de Fresnel.

10. Vitrage selon la revendication 9, **caractérisé par le fait que** le relief réfléchissant est un relief de type prisme de Fresnel, les prismes individuels dudit relief étant essentiellement parallèles à la tranche (13) éclairée de la première feuille de verre.

11. Vitrage selon la revendication 9, **caractérisé par le fait que** le relief réfléchissant est un relief de type prisme de Fresnel, les prismes individuels dudit relief ayant une forme arquée.

12. Vitrage selon la revendication 10 ou 11, **caractérisé par le fait que** les surfaces obliques réfléchissantes du prisme sont orientées vers la source de lumière.

13. Vitrage selon l'une quelconque des revendications précédentes, **caractérisé par le fait que** la structure plate transparente (6) est en contact, sur toute sa surface opposée à celle pourvue d'un relief réfléchissant, avec la deuxième surface principale (12) de la première feuille, l'interface de contact étant essentiellement exempte d'un matériau ayant un indice de réfraction n₅ < n₁, notamment exempte d'air (nₐᵢᵣ = 1).

14. Véhicule, de préférence véhicule automobile, comportant un vitrage éclairant selon l'une quelconque des revendications précédentes.

15. Véhicule selon la revendication précédente, **caractérisé par le fait que** le vitrage éclairant fait partie du toit du véhicule.

## Patentansprüche

1. Leuchtende Verglasung, die Folgendes umfasst
- eine erste Glasplatte (1) mit einem Brechungsindex n₁ mit einer ersten Hauptfläche (11), einer zweiten Hauptfläche (12) und einer Kante (13);
- eine transparente Polymerfolie (3) in Haftkontakt mit der zweiten Hauptfläche (12) der ersten Platte (1), wobei die Folie einen Brechungsindex n₂ < n₁ aufweist;
- eine Lichtquelle (8), vorzugsweise ein Leuchtdiodenmodul (LED-Modul), das gegenüber der Kante (13) der ersten Glasplatte positioniert ist,
**dadurch gekennzeichnet, dass** eine Zone (5) der zweiten Hauptfläche (12) der ersten Glasplatte mit einem reflektierenden Relief mit im Wesentlichen spiegelnder Reflexion versehen ist, oder mit einer transparenten flachen Struktur (6), mit einem Brechungsindex n₃ größer oder gleich n₁ bedeckt ist, die mit einem reflektierenden Relief mit im Wesentlichen spiegelnder Reflexion versehen ist.

2. Verglasung nach Anspruch 1, **dadurch gekennzeichnet, dass** sie ferner eine zweite Glasplatte (2) mit einer ersten Hauptfläche (21), einer zweiten Hauptfläche (22) und einer Kante (23) umfasst, wobei die transparente Polymerfolie (3) in Haftkontakt mit der zweiten Hauptfläche (12) der ersten Glasplatte (1) und mit der ersten Hauptfläche (21) der zweiten Platte (2) steht.

3. Verglasung nach Anspruch 1 oder 2, **dadurch gekennzeichnet, dass** die Höhe des reflektierenden Reliefs zwischen 5 µm und 1 mm, vorzugsweise zwischen 10 µm und 500 µm, insbesondere zwischen 20 und 100 µm liegt.

4. Verglasung nach einem der vorstehenden Ansprüche, **dadurch gekennzeichnet, dass** die transparente flache Struktur (6) eine Kunststofffolie ist, vorzugsweise aus Poly(ethylenterephthalat), Polycarbonat, Poly(methylmethacrylat), Polystyrol oder eine mineralische oder organo-mineralische Beschichtung auf der Basis von Kieselsäure, die auf dem Sol-Gel-Weg erhalten wird.

5. Verglasung nach einem der vorstehenden Ansprüche, **dadurch gekennzeichnet, dass** die reflektierende Beschaffenheit des Reliefs auf dem Vorhandensein einer Metallschicht, die auf dem Relief abgelagert ist, beruht.

6. Verglasung nach einem der Ansprüche 1 bis 4, **dadurch gekennzeichnet, dass** die reflektierende Beschaffenheit des Reliefs darauf beruht, dass der Brechungsindex n₂ der transparenten Polymerfolie (3) um mindestens 0,02 niedriger, vorzugsweise um mindestens 0,1 niedriger als der Index n₁ der ersten Glasplatte (1) oder der Index n₃ der flachen Struktur (6) ist.

7. Verglasung nach einem der Ansprüche 1 bis 4, **dadurch gekennzeichnet, dass** die reflektierende Beschaffenheit des Reliefs auf dem Vorhandensein einer Beschichtung mit niedrigem Index auf dem Relief beruht, die einen Brechungsindex n₄ aufweist, der um mindestens 0,02 niedriger, vorzugsweise um mindestens 0,1 niedriger als der Index n₁ der ersten Glasplatte (1) oder als der Index n₃ der flachen Struktur (6) ist.

8. Verglasung nach einem der vorstehenden Ansprüche, **dadurch gekennzeichnet, dass** das reflektierende Relief geometrische Muster umfasst, die aus flachen oder gekrümmten Oberflächen bestehen, wobei das Relief vorzugsweise ein regelmäßiges Relief mit sich wiederholenden geometrischen Mustern ist.

9. Verglasung nach einem der vorstehenden Ansprüche, **dadurch gekennzeichnet, dass** das reflektierende Relief ein Relief vom Typ Fresnel-Linse oder vom Typ Fresnel-Prisma ist.

10. Verglasung nach Anspruch 9, **dadurch gekennzeichnet, dass** das reflektierende Relief ein Relief vom Typ Fresnel-Prisma ist, wobei die individuellen Prismen des Reliefs im Wesentlichen zu der beleuchteten Kante (13) der ersten Glasplatte parallel sind.

11. Verglasung nach Anspruch 9, **dadurch gekennzeichnet, dass** das reflektierende Relief ein Relief vom Typ Fresnel-Prisma ist, wobei die individuellen Prismen des Reliefs eine bogenförmige Form aufweisen.

12. Verglasung nach Anspruch 10 oder 11, **dadurch gekennzeichnet, dass** die schrägen reflektierenden Oberflächen des Prismas zu der Lichtquelle gerichtet sind.

13. Verglasung nach einem der vorstehenden Ansprüche, **dadurch gekennzeichnet, dass** die transparente flache Struktur (6) auf ihrer gesamten Oberfläche, die der entgegengesetzt ist, die mit einem reflektierenden Relief versehen ist, mit der zweiten Hauptfläche (12) der ersten Platte in Kontakt steht, wobei die Kontaktgrenzfläche im Wesentlichen frei von einem Material ist, das einen Brechungsindex n₅ < n₁ aufweist, insbesondere frei von Luft (n_{Luft} = 1) ist.

14. Fahrzeug, vorzugsweise ein Kraftfahrzeug, das eine leuchtenden Verglasung nach einem der vorstehenden Ansprüche umfasst.

15. Fahrzeug nach dem vorstehenden Anspruch, **dadurch gekennzeichnet, dass** die leuchtende Verglasung Teil des Fahrzeugdachs ist.

## Claims

1. A lighting glazing comprising
- a first sheet of glass (1) of refractive index n₁ with a first main face (11), a second main face (12) and a rim (13);
- a transparent polymer film (3) in adhesive contact with the second main face (12) of the first sheet (1), said film having a refractive index n₂ < n₁;
- a light source (8), preferably a light-emitting diode module (LED module), positioned facing the rim (13) of the first sheet of glass,
**characterized in that** an area (5) of the second main face (12) of the first sheet of glass is provided with a reflecting relief essentially of specular type or else is covered with a transparent flat structure (6), of refractive index n₃ greater than or equal to n₁, provided with a reflecting relief essentially of specular type.

2. The glazing as claimed in claim 1, **characterized in that** it also comprises a second sheet of glass (2) with a first main face (21), a second main face (22) and a rim (23), the transparent polymer film (3) being in adhesive contact with the second main face (12) of the first sheet of glass (1) and with the first main face (21) of the second sheet (2).

3. The glazing as claimed in claim 1 or 2, **characterized in that** the height of the reflecting relief is between 5 µm and 1 mm, preferably between 10 µm and 500 µm, in particular between 20 and 100 µm.

4. The glazing as claimed in any one of the preceding claims, **characterized in that** the transparent flat structure (6) is a film of plastic material, preferably of poly(ethylene terephthalate), polycarbonate, poly(methylmethacrylate), polystyrene, or a silica-based mineral or organo-mineral coating obtained by sol-gel pathway.

5. The glazing as claimed in any one of the preceding claims, **characterized in that** the reflecting nature of the relief is due to the presence of a metallic layer deposited on said relief.

6. The glazing as claimed in any one of claims 1 to 4, **characterized in that** the reflecting nature of the relief is due to the fact that the refractive index n₂ of the transparent polymer film (3) is less by at least 0.02, preferably by at least 0.1, than the index n₁ of the first sheet of glass (1) or than the index n₃ of the flat structure (6).

7. The glazing as claimed in any one of claims 1 to 4, **characterized in that** the reflecting nature of the relief is due to the presence, on said relief, of a coating of low index having a refractive index n₄ less by at least 0.02, preferably by at least 0.1, than the index n₁ of the first sheet of glass (1) or than the index n₃ of the flat structure (6).

8. The glazing as claimed in any one of the preceding claims, **characterized in that** the reflecting relief comprises geometrical patterns consisting of flat or curved surfaces, said relief preferably being a regular relief with repetitive geometrical patterns.

9. The glazing as claimed in any one of the preceding claims, **characterized in that** the reflecting relief is a relief of Fresnel lens type or of Fresnel prism type.

10. The glazing as claimed in claim 9, **characterized in that** the reflecting relief is a relief of Fresnel prism type, the individual prisms of said relief being essentially parallel to the lit rim (13) of the first sheet of glass.

11. The glazing as claimed in claim 9, **characterized in that** the reflecting relief is a relief of Fresnel prism type, the individual prisms of said relief having an arched form.

12. The glazing as claimed in claim 10 or 11, **characterized in that** the reflecting oblique surfaces of the prism are oriented toward the light source.

13. The glazing as claimed in any one of the preceding claims, **characterized in that** the transparent flat structure (6) is in contact, over all of its surface opposite to that provided with a reflecting relief, with the second main surface (12) of the first sheet, the contact interface being essentially free of a material having a refractive index n₅ < n₁, notably free of air (nₐᵢᵣ = 1).

14. A vehicle, preferably a motor vehicle, comprising a lighting glazing as claimed in any one of the preceding claims.

15. The vehicle as claimed in the preceding claim, **characterized in that** the lighting glazing forms part of the roof of the vehicle.
